(19) Europäisches Patentamt
European Patent Office
Office européen des brevets

(11) **EP 3 182 494 A1**

(12) **EUROPEAN PATENT APPLICATION**

(43) Date of publication:
**21.06.2017 Bulletin 2017/25**

(51) Int Cl.:
**H01M 8/20** (2006.01)  **H01M 6/32** (2006.01)

(21) Application number: **15200865.2**

(22) Date of filing: **17.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **CONSEJO SUPERIOR DE INVESTIGACIONES CIENTIFICAS**
**28006 Madrid (ES)**
• **Simon Fraser University**
**Vancouver, British Columbia V6B 5K3 (CA)**

(72) Inventors:
• **ESQUIVEL BOJORQUEZ, Juan Pablo**
**28006 Madrid (ES)**
• **SABATÉ VIZCARRA, María Neus**
**28006 Madrid (ES)**
• **ALDAY LARA, Perla Patricia**
**28006 Madrid (ES)**
• **KJEANG, Erik**
**Vancouver, British Columbia (CA)**
• **IBRAHIM, Omar**
**Vancouver, British Columbia (CA)**

(74) Representative: **Pons**
**Glorieta Ruben Dario 4**
**28010 Madrid (ES)**

(54) **PORTABLE AND DISPOSABLE POWER SOURCE FOR MEASURING AND/OR MONITORING SOLUTIONS**

(57) The present invention relates to a power source based on a capillary-based microfluidic redox flow cell made from cellulose and carbon materials which are completely safe and non-toxic, yet inexpensive. The power will be generated by electrochemical reactions facilitated by flowing redox species through porous electrodes. These organic substances will be stored in the capillary-based microfluidic redox flow cell and recover their initial structure upon the addition of any liquid, such as wastewater, seawater, urine, that can even be the same sample to be analyzed. The mass transport within the power source will entirely rely on capillary flow through the different porous materials. Hence, the power source will not require a pump to operate. Once the capillary-based microfluidic redox flow cell is completely wet and the species oxidized/reduced, the power source can be disposed with no environmental impact, as it does not contain any metals or harmful substances.

FIG.19

EP 3 182 494 A1

**Description**

## OBJECT OF THE INVENTION

The present invention relates to a portable power source for measuring and/or monitoring solutions, which will not require recycling facilities. Furthermore, the power source uses inexpensive materials such as paper, carbon electrodes and preferably organic redox species, thus constituting a biodegradable and even compostable power source.

The object of the invention is a completely biodegradable power source based on a capillary-based microfluidic redox flow cell made on cellulose and carbon materials which is completely safe and non-toxic, yet inexpensive. The power will be generated by electrochemical reactions facilitated by flowing redox species through porous electrodes. These substances will be stored in the capillary-based microfluidic redox flow cell in a solid state and will dissolve upon the addition of any liquid, such as wastewater, seawater, urine, that can even be the same sample to be analyzed. The mass transport within the power source will entirely rely on capillary flow through the different porous materials. Hence, the power source will not require a pump to operate. Once the capillary-based microfluidic redox flow cell is completely wet and the species oxidized/reduced, the power source can be disposed with no environmental impact, as it does not contain any metals or harmful substances.

## BACKGROUND OF THE INVENTION

Measurement of water quality is critically important in low resource settings and requires reliable yet inexpensive diagnostic systems. Most measurement devices need power to function and will most commonly obtain it from a battery. Once this battery is discharged, it will have to be recharged or replaced by a new one.

Recharging will not be possible in places without established power grids and replacement will lead to an inappropriate disposal of batteries as there is a lack of recycling facilities, which can pose severe soil contamination and health related problems.

As an alternative to solid state batteries, fuel cells are electrochemical devices that can generate power from a liquid or gaseous fuel and oxygen from the air. These devices commonly use organic materials as fuel in electrochemical power sources such as direct methanol fuel cells or direct formic acid fuel cells. However, the electrochemical reactions involving these fuels generally require precious metal catalysts such as platinum or palladium as well as specialized ion-conducting polymeric membranes, both of which comprise of expensive and non-disposable materials. A more affordable and sustainable option is provided by microbial and enzyme-based fuel cells which utilize biological entities instead of precious metal catalysts. However, their power output is generally much lower than the target application requirements and these kinds of biocatalysts often have limited stability and durability.

The portable power source for water measuring and monitoring systems of the present invention, which will not require recycling facilities, constitutes a biodegradable and even compostable power source that can generate practical power output without the use of catalysts and membranes.

## DESCRIPTION OF THE INVENTION

The present invention relates to a portable and disposable power source for measuring and/or monitoring solutions, which will not require recycling facilities. Furthermore, the power source can use inexpensive materials such as paper, carbon electrodes and organic redox species, thus constituting a biodegradable and even compostable power source.

The portable and disposable power source for measuring and/or monitoring solutions comprises:

- a flow cell comprising:

  - a microfluidic path,
  - an anode electrode, and
  - a cathode electrode,

- an anolyte comprising:

  - an active redox species suitable for oxidation at the anode electrode, and,
  - a supporting electrolyte,

- a catholyte comprising:

- an active redox species suitable for reduction at the cathode electrode, and,
- a supporting electrolyte.

The portable power source further comprises:

- at least one absorbent pad,
- wherein the microfluidic path is a capillary-based microfluidic path, and
- wherein the anolyte and the catholyte are intended to flow through the capillary-based microfluidic path in a parallel co-laminar arrangement toward the absorbent pad, by means of the solution, being intended to be deposited on the flow cell, and
- wherein at least the capillary-base microfluidic path, the anolyte, the catholyte and the absorbent pad are biodegradable, preferably compostable.

The power in the portable power source is generated by flowing the anolyte and catholyte through the anode and the cathode, respectively, due to the presence of the absorbent pad in such a way that no external pumps are needed.

The parallel co-laminar flow of anolyte and catholyte in the microfluidic path facilitates convective separation of the two streams and uniquely enables flow cell operation without a membrane otherwise used to isolate the two electrodes. The membrane-less flow cell configuration is critical for the biodegradability of the power source and also reduces its cost and part count.

The absorbent pad is preferably situated adjacent to an end of the capillary-based microfluidic path. So constituted, the portable power source increases the power that it is capable of delivering due to the flow of the species established through the capillary-based microfluidic path. This increase corroborates the influence of the flow rate on the power source performance.

Optionally, the capillary-based microfluidic path is a paper-based microfluidic path. Preferably the paper-based microfluidic path comprises a primary pore diameter between 0.1 and 50 $\mu$m.

Optionally, the active redox species are organic redox species.

As a preferred selection, the two selected species are 4,5-dihydroxy-1,3-benzenedisulfonic acid disodium salt ($H_2$BQDS) and anthraquinone-2-sulfonic acid sodium salt (AQS). The presence of the sulfonic groups enhances the solubility of the compounds. The BQDS couple has higher standard reduction potential than that of the AQS and therefore it has to be charged first to the desired state required for discharge mode. After charging the species, the BQDS (oxidized form) can be used as the catholyte while the $H_2$AQS is used as the anolyte (reduced form) according to the following reactions:

$$H2BQDS \leftrightarrow BQDS + 2e^- + 2H^+ \qquad (1)$$

$$AQS + 2e^- + 2 H^+ \leftrightarrow H_2AQS \qquad (2)$$

In general the Quinone compounds would undergo two electrons and two protons transfer in acidic media, while they would undergo two electrons transfer in alkaline media.

The active redox species are preferably both available in a lyophilized state and soluble in liquid or in the supporting electrolytes. Suitable redox species that are fully available in the lyophilized state are ascorbic acid in potassium hydroxide at the anode and BQDS in oxalic acid at the cathode.

Preferably, the capillary-based microfluidic path is disposed over the anode and the cathode, wherein the species suitable for being oxidised in the anode and the species suitable for being reduced in the cathode are intended to flow through the capillary-based microfluidic path over the anode and the cathode towards the absorbent pad.

Also preferably, the capillary-based microfluidic path is disposed at least below and over the anode and the cathode, wherein the species suitable for being oxidised in the anode and the species suitable for being reduced in the cathode are intended to flow from the capillary-based microfluidic path towards the absorbent pad through the anode and the cathode, being the anode and the cathode a porous anode and a porous cathode respectively. In that case, the anode and cathode electrodes are made of porous, electrically conductive, hydrophilic material positioned in a way that the flow from the capillary-based microfluidic path is directed through the internal pores of the electrodes before reaching the absorbent pad. The resulting flow-through porous electrode configuration increases the power output and energy conversion efficiency of the device by improving the local mass transport and utilization of the active area at the electrodes.

Also preferably, an alkaline supporting electrolyte is used at the anode while an acidic supporting electrolyte is used at the cathode. An alkaline pH shifts the electrochemical potential of the anode electrode to a more negative value while an acidic pH shifts the electrochemical potential of the cathode electrode to a more positive value; hence, increasing the net cell voltage which is equal to the difference between the electrochemical potentials of the cathode and the anode electrodes. This increased cell voltage leads to higher power output of the device. This feature is uniquely enabled by the membrane-less flow cell design which allows mixed media conditions for the anode and cathode half-cells.

Optionally, the capillary-based microfluidic path comprises two reservoirs for the storage of the anolyte and catholyte species.

## BRIEF DESCRIPTION OF THE DRAWINGS

Figure 1 shows a perspective view of a first preferred embodiment of the portable power source for measuring and/or monitoring solutions of the present invention.

Figure 2 shows a cross-section A-A of Figure 1.

Figure 3 shows an exploded view of the various layers of the device indicating the thickness.

Figure 4 shows a perspective view of a second preferred embodiment of the portable and disposable power source for measuring and/or monitoring solutions of the present invention.

Figure 5 shows a planar view and a cross-section diagram of the setup for flow over electrode configuration of the portable power source for measuring and/or monitoring solutions of the present invention.

Figure 6 shows a planar view and a cross-section diagram of the setup for flow through electrode configuration of the portable power source for measuring and/or monitoring solutions of the present invention.

Figure 7 shows the power output measured by discharging the power source shown in Figure 4 through a 500 $\Omega$ load. Performance data are shown for for both liquid solutions and stored solid species activated by liquid using for the anode $H_2BQS$ as the species and KOH as the electrolyte and for the cathode pBQ as the species and Oxalic acid as the electrolyte.

Figure 8 shows the polarization and power curves for all-Quinone chemistry on flow over and flow through porous electrodes in a paper-based flow cell.

Figure 9 shows a chronoamperogram at 0.25 V for all-Quinone chemistry on flow over and flow through porous electrodes in a paper-based flow cell.

Figure 10 shows a table summarizing the in-situ redox chemistry evaluation using a co-laminar flow cell (CLFC) with flow-through porous electrodes.

Figure 11 shows the polarization and power curves for the in-situ CLFC performance results at a flow rate of 100 $\mu$l/min for $H_2BQS$ and AA (0.1 M) in 1 M KOH at the anode coupled with pBQ (0.1 M) in 1 M $H_2SO4$ at the cathode.

Figure 12 shows the polarization and power curves with the effect of supporting electrolyte at the cathode (0.1 M pBQ) on the in-situ CLFC performance at a flow rate of 100 $\mu$l/min. 0.1 M AA in 1 M KOH was used at the anode.

Figure 13 shows OCV and maximum power output of the power source of Figures 1 to 3 obtained during polarization conducted over a period of one hour with internally stored all-Quinone organic redox chemistry.

Figure 14 shows polarization and power curves for the power source of Figures 1 to 3 with all-Quinone redox chemistry at the time of maximum performance.

Figure 15 shows power output for discharge through a 500 $\Omega$ load obtained with the power source from the embodiment of Figures 1 to 3 over one hour of state redox chemistry.

Figure 16 shows OCV and maximum power output of the power source from the embodiment of Figures 1 to 3 obtained during polarization conducted over one hour, comparing $H_2BQS$ and AA anode species.

Figure 17 shows polarization and power curves of the power source from the embodiment of Figures 1 to 3 at the time of maximum power output, comparing $H_2BQS$ and AA anode species.

Figure 18 shows power output over time for the power source from the embodiment of Figures 1 to 3 connected to a 500 Ω load for $H_2BQS$ anode with pBQ cathode, AA anode with pBQ cathode and AA anode with $Fe(NO_3)_3$ cathode.

Figure 19 shows two configurations of the power source of the present invention wherein the liquid flows through thickness of porous anode (2) electrode and porous cathode (3) electrode.

Figure 20 shows one configuration of the power source of the present invention wherein the liquid flows through the length of porous anode (2) electrode and porous cathode (3) electrode.

Figure 21 shows one configuration of the power source of the present invention comprising a plurality of flow cells connected in parallel with a single inlet pad.

Figure 22 shows one configuration of the power source of the present invention wherein the anode (2) and cathode (3) electrodes are stacked on top of each other.

Figure 23 shows one configuration of the power source of the present invention wherein the anode (2) and cathode (3) electrodes are side by side disposed.

Figure 24 shows one configuration of the power source of the present invention wherein the power source comprises a cylindrical shape flow cell, an impermeable separator between anode and cathode electrodes.

## PREFERRED EMBODIMENT OF THE INVENTION

The portable and disposable power source for measuring and/or monitoring aqueous solutions comprises:

- a flow cell comprising:

  - a capillary-based microfluidic path (1),
  - a porous anode (2) electrode, and
  - a porous cathode (3) electrode,

- an anolyte comprising:

  - an organic active redox species (4) suitable for oxidation at the porous anode (2), and,
  - a supporting electrolyte,

- a catholyte comprising:

  - an organic active redox species (5) suitable for reduction at the porous cathode (3), and,
  - a supporting electrolyte.

- an absorbent pad (6),
- wherein the anolyte and the catholyte are intended to flow through the capillary-based microfluidic path (1) in a parallel co-laminar arrangement toward the absorbent pad (6), by means of the solution, being intended to be deposited on the flow cell.

Preferably, the capillary-based microfluidic path (1) is a paper-based microfluidic path (1) comprising a primary pore diameter between 0.1 and 50 μm. This results in Reynolds numbers on the order of $10^{-3}$ at flow rates up to 100 μl/min. This low Reynolds number ensures that the flow is kept in the laminar flow regime which allows the flow of the anolyte and the catholyte to take place in a parallel co-laminar format in the paper-based microfluidic path (1). Under this regime, mixing of the two co-laminar streams of anolyte and catholyte occurs only by diffusion and is restricted to an interfacial width at the center of the paper-based microfluidic path. Thus, if the anode and cathode electrodes are placed at sufficient distance from the inter-diffusion zone, anode and cathode reactions can take place independently. Moreover, the distance between the anode and the cathode is not larger than a predetermined distance in order to avoid the increase in the internal resistance of the power source. Therefore, the anode and the cathode are placed on opposites sides of the paper-based microfluidic path, preferably separated between 0,2 and 3 mm.

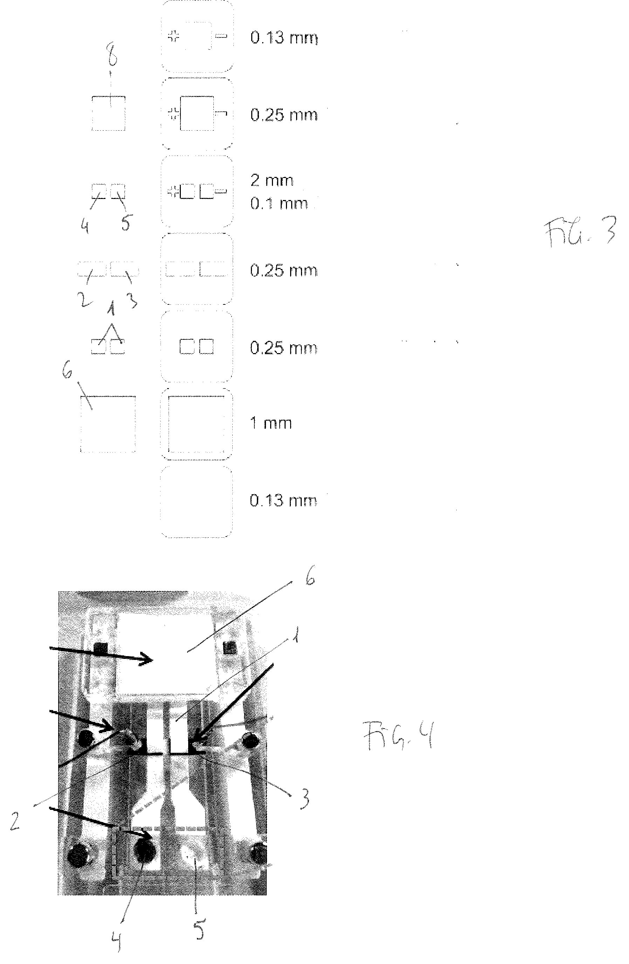

In a second preferred embodiment shown in Figure 3, the absorbent pad (6) is preferably located adjacent to an end of the capillary-based microfluidic path (1). So constituted, the portable power source increases the power that it is capable of delivering due to the flow of the species established through the capillary-based microfluidic path (1).

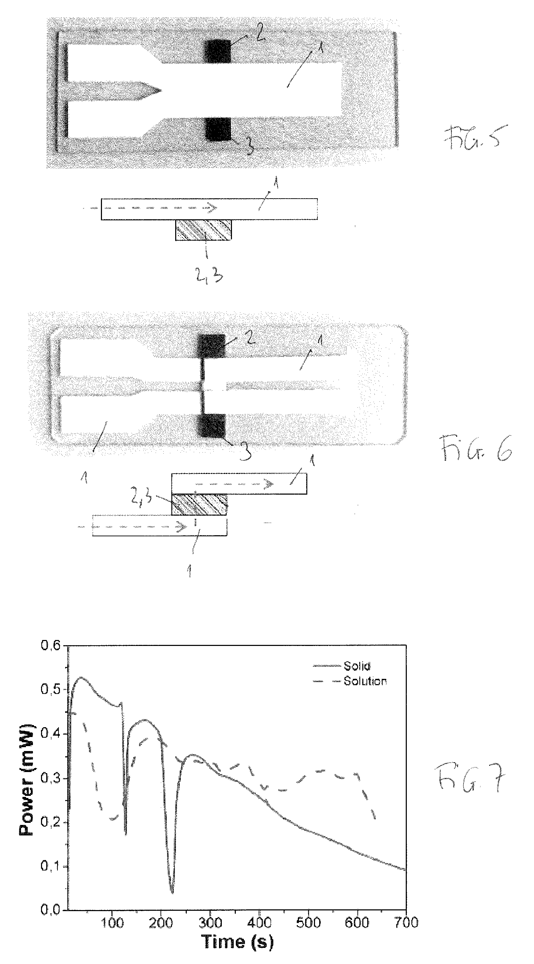

Preferably, the capillary-based microfluidic path (1) is disposed over the porous anode (2) and the porous cathode (3), wherein the anolyte and the catholyte are intended to flow through the capillary-based microfluidic path (1) over the porous anode (2) and the porous cathode (3) towards the absorbent pad (6), as shown in Figure 5.

More preferably, the capillary-based microfluidic path (1) is split into two portions located below and above the anode (2) and the cathode (3), wherein the anolyte and the catholyte are intended to flow from the capillary-based microfluidic path (1) towards the absorbent pad (6) through the anode (2) and the cathode (3), being the anode (2) and the cathode (3) a porous anode (2) and a porous cathode (3) respectively, arranged in a flow-through configuration, as shown in Figure 6.

In other preferred configurations the power source includes one absorbent pad (6) for each one of the anolyte and the catholyte.

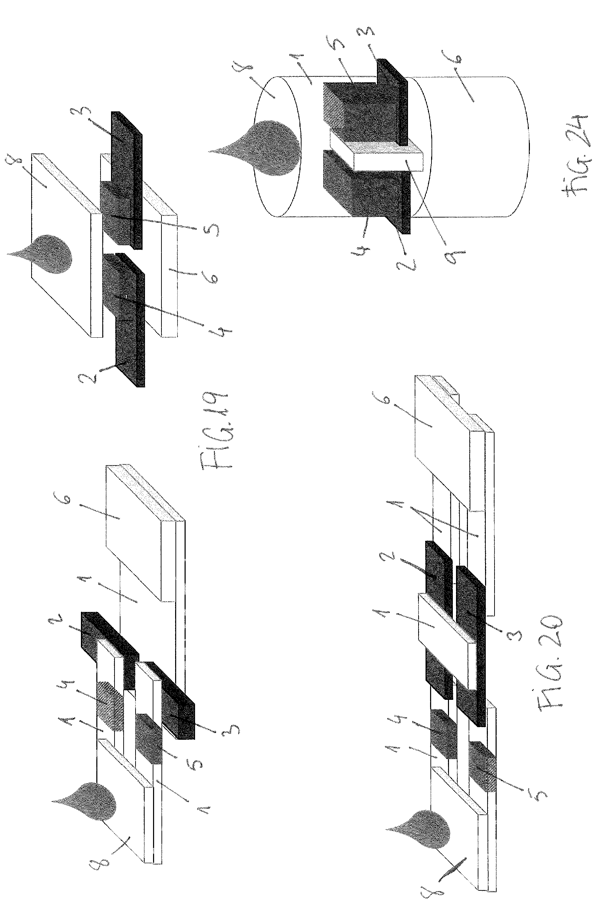

In other preferred configurations the liquid flows through thickness of porous anode (2) electrode and porous cathode (3) electrode (Fig. 19) or through the length of porous anode (2) electrode and porous cathode (3) electrode (Fig. 20).

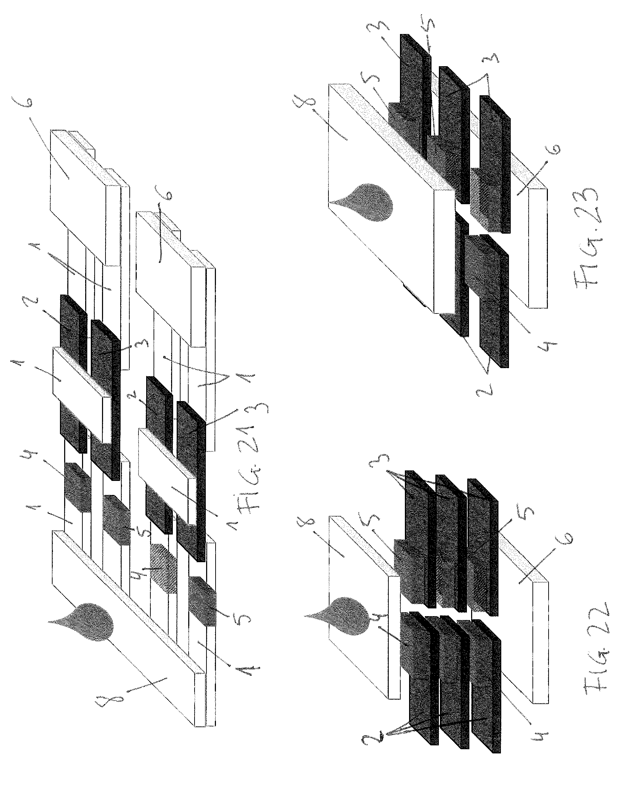

In other preferred configurations the power source comprises a plurality of flow cells connected in series or parallel to increase voltage or current output. It can be a single inlet or separate inlet pads (8) for each cell (Fig. 21), or absorbent pad (6) can be a single one or separated pads (6) of each cell, or anode (2) and cathode (3) electrodes are stacked on top of each other (Fig. 22) or anode electrodes (2) and cathode electrodes (3) are side by side disposed (Fig. 23).

In other preferred configuration (Fig. 24) the power source comprises a cylindrical shape flow cell, an impermeable separator between anode (2) and cathode (3) electrodes, for meeting standard alkaline battery sizes.

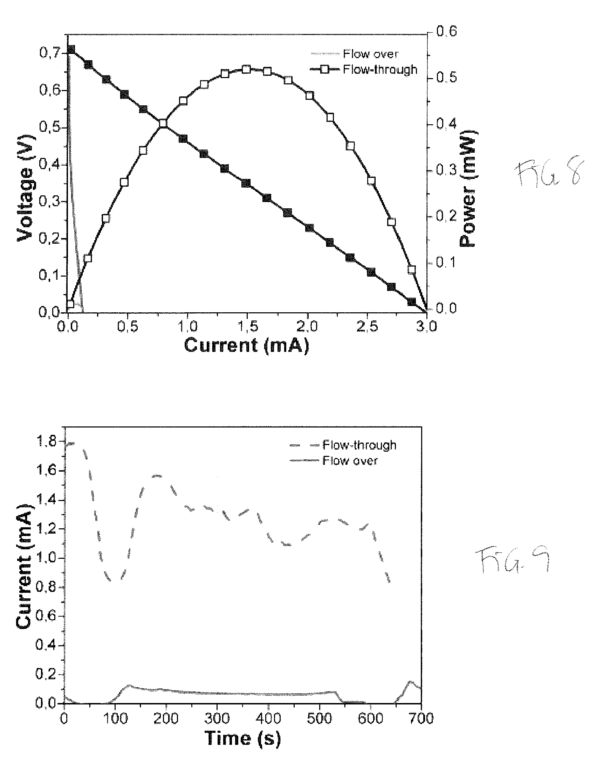

As shown in Figure 8, the performance of the power source with the flow-through porous electrodes (Fig. 6) is 40x higher than the corresponding power source with flow-over electrodes (Fig. 5), achieving a maximum power of 0.5 mW when operated on the all-Quinone redox chemistry. The chrono-amperograms, when the cells were running at a fixed potential of 0.25 V, are also shown in Figure 9. The result shows that the power source is able to provide a sustained output power for more than 10 minutes and that the flow-through architecture yields roughly an order of magnitude higher current output and reactant utilization efficiency than the flow over design.

The capillary-based microfluidic path (1) comprises two reservoirs (7) for the storage of the anolyte and the catholyte respectively. The species (4, 5) can be stored in solid form or in solution. Figure 7 shows the power output over a 500 $\Omega$ load in the second preferred embodiment of the portable power source shown in Figure 4 for both liquid solutions and stored solid species activated by liquid, using for the anode $H_2BQS$ as the species and KOH as the electrolyte and for the cathode pBQ as the species and Oxalic acid as the electrolyte.

The preferred anolyte and catholyte chemistries were first evaluated in a microfluidic co-laminar flow cell (CLFC) with flow through porous electrodes which can be operated at steady state and thereby facilitate steady state testing of various chemistries in the same device. Similar experiments are known in the state of the art [Ibrahim, O.A., Goulet, M.-A. and Kjeang, E., In-situ characterization of symmetric dual-pass architecture of microfluidic co-laminar flow cells, Electrochimica Acta 187 (2016) 277-285]. The aim of these experiments was to estimate the maximum achievable power output and the open circuit voltage (OCV) of the full redox flow cell in CLFC form. The experiments were done in the upstream redox flow cell portion of the dual-pass CLFC in order to perform the measurements with minimal crossover losses. A dual syringe pump was used to provide the supply flow rate into the redox flow cell. The redox flow cells were tested at 10 pl/min, 100 $\mu$l/min and 300 $\mu$l/min, which represent the expected range of flow rates in the paper-based microfluidic path (1).

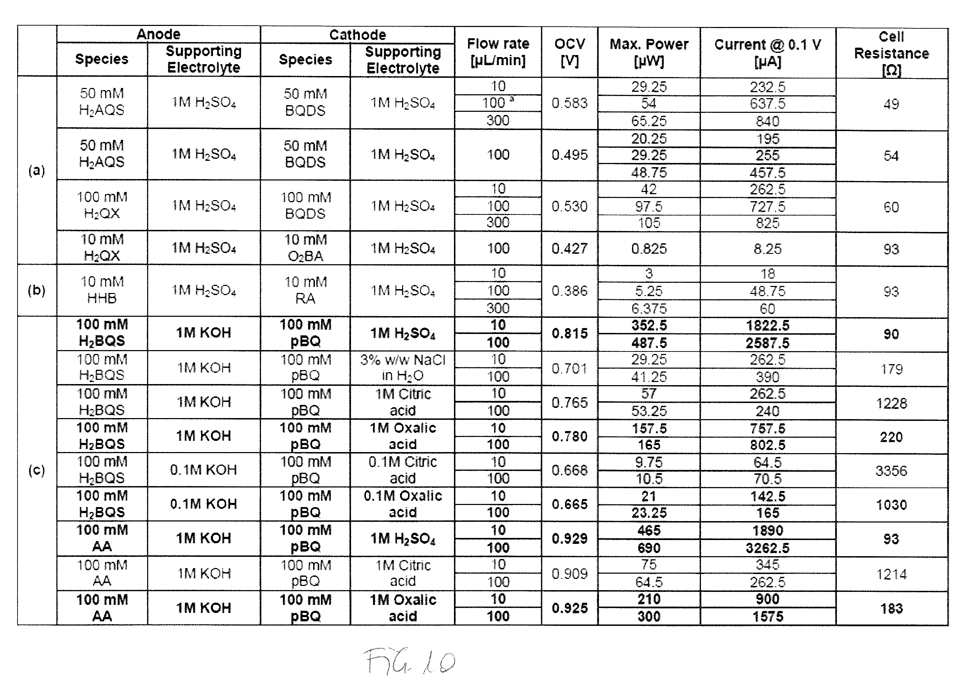

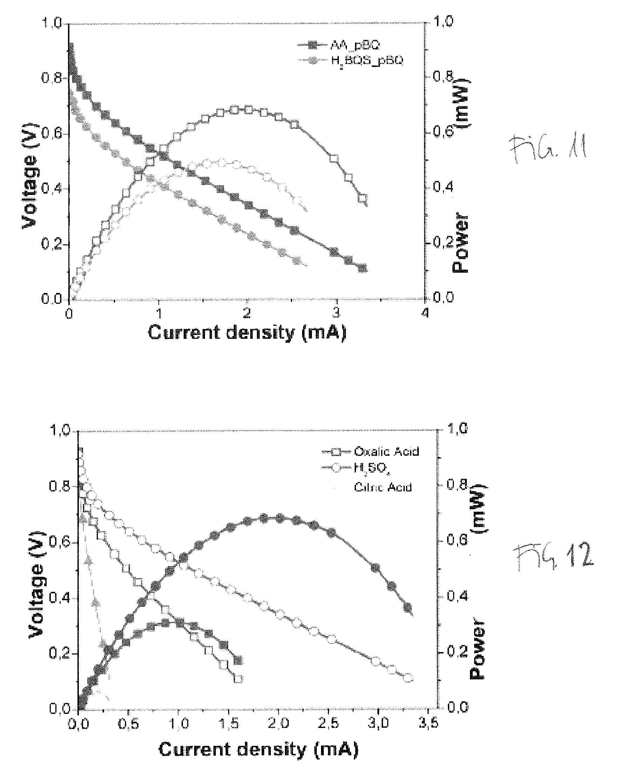

The table shown in Figure 10, hereby included by reference, includes a set of CLFC based discharge experiments conducted on different coupled half cells. Section (a) of the table shows the species that needed prior charging, and thus were used only as preliminary results yet discarded for this application. The reduced form of the QX was identified as a more soluble anodic species. By replacing the $H_2AQS$ by $H_2QX$, a higher power output of 0.105 mW was obtained at a flow rate of 300 $\mu$l/min compared to 0.054 mW in the case of $H_2AQS$. In section (b), the results for using the THBQ are summarized. The THBQ was initially charged into the associated HHB and RA oxidation states for potential use as anode and cathode respectively, in the power source. The three different oxidation states of this species are commercially available in solid form. However, the poor solubility of the species resulted in low performance output and the OCV of the cell was found to be less than 0.4 V which is inadequate for the target application. In the last section (c) of the table, the results for the mixed media operation are summarized, in which alkaline and acidic conditions were used at the anode and cathode, respectively. A peak power output of 0.69 mW was measured for the case of using AA in KOH at the anode with pBQ in $H_2SO_4$ at the cathode, which was the highest cell performance obtained with the reactant chemistries considered in Figure 10. The polarization and power density at 100 $\mu$l/min are shown in Figure 11, for both cases of AA or $H_2BQS$ anodes when coupled with pBQ in $H_2SO_4$ at the cathode.

The performance of the anode in KOH when coupled with pBQ cathodes in various storable supporting electrolytes is shown in Figure 12. It is shown from the figure that the OCV equaled 0.925 V and that maximum power of 0.3 mW were obtained when using the oxalic acid supporting electrolyte.

Optionally, the redox species and supporting electrolytes are organic substances, preferably being stored in a lyophilized state within the power source. The active redox species and/or the supporting electrolyte are preferably in the solid form and the active redox species are preferably in the most suitable oxidation states for use in discharge operation. Preferably, all species are soluble in water or other working fluids used for activation of the power source.

<u>EXAMPLE</u>

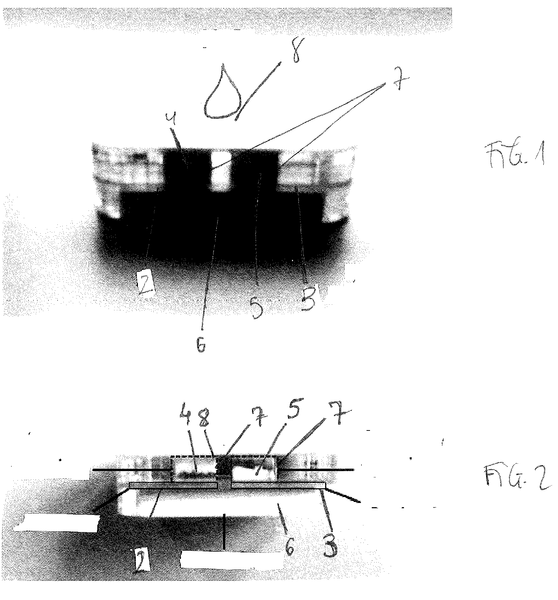

In the next example the power source was designed to be a vertical flow paper based cell (Figures 1-3) that would be more practical than the lateral flow cells (Figure 4) described previously, from the power source end-use standpoint in terms of compactness, form factor, and utility.

The power source comprises a central inlet pad (8) able to receive a small volume of a solution, preferably water. All reactant species and supporting electrolytes needed to run the power source are stored in solid form in a layer of the power source placed under the central inlet pad (8). The addition of a droplet of water on the central inlet pad (8) makes the anolyte and catholyte species dissolve and flow through the porous electrodes (anode and cathode) to the absorbent pad (6).

Figure 3 shows an exploded view for the various layers of the power source indicating the thickness. Details of the reservoirs wherein the anolyte and catholyte species are stored and dissolved, the flow-through porous electrodes where the electrochemical reactions take place and the absorbent pad at the bottom are shown in the annotated image of the device cross-section in Figure 2.

The anolyte and catholyte species used in the present case are 0.1 M $H_2BQS$ in 1 M KOH and 0.1 M pBQ in 1 M oxalic acid, respectively. The species and electrolytes were stored in solid state in the amount that would result in those concentrations when fully dissolved in 500 $\mu$L of water. The power source so designed is capable of absorbing around 500 $\mu$L of water droplet volume at the central inlet pad (8).

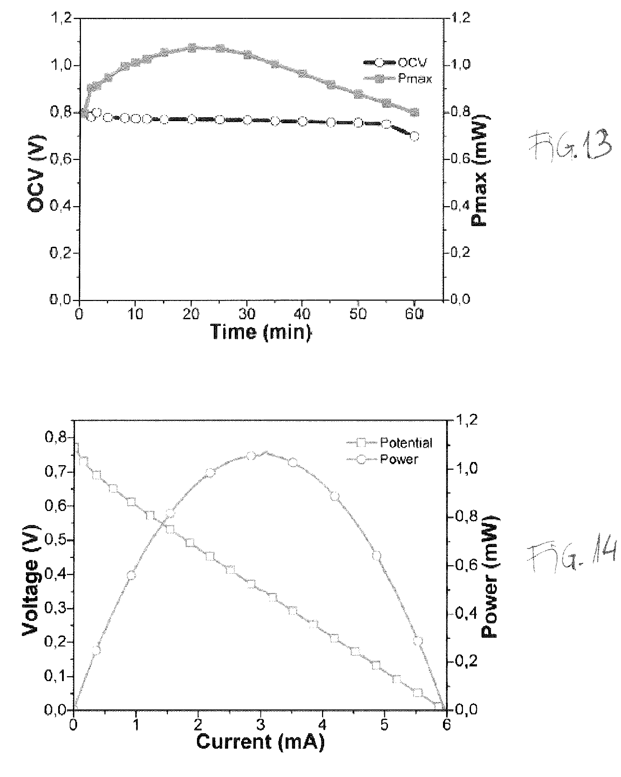

Upon the addition of water, the polarization curves were continuously measured over the course of one hour. The open circuit voltage of the power source was also recorded between the discharge periods. Figure 13 shows the maximum power output ($P_{max}$) extracted from the polarization curves and the open circuit voltage (OCV) recorded during one hour. Relatively stable cell performance of approximately 1.0 mW power and 0,8 V OCV was observed during this period.

From Figure 13 it can be seen that the highest power output was obtained after 20 minutes of discharge operation. This was likely due to the slow dissolving rate of the solid Quinone species. Figure 14 shows the polarization curve corresponding to the highest performance data recorded from the power source: a maximum power output of 1.1 mW at a current output of 3 mA was measured, which is sufficient to run a small signal processor.

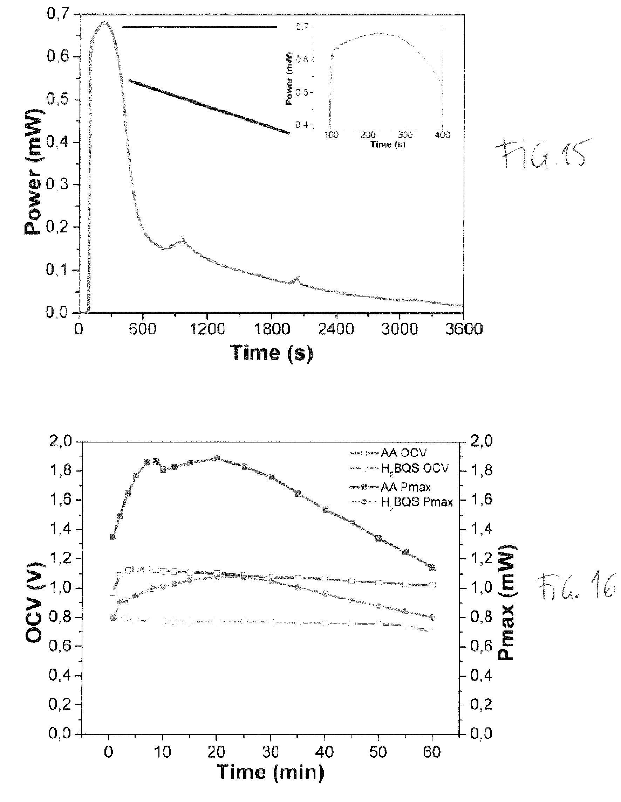

Moreover, the discharge performance of the power source was tested by connecting a load of 500 $\Omega$ for three hours and recording the redox flow cell potential. The power output was then calculated and plotted against time. Figure 15 depicts the performance of the device during the first hour after water activation. The inset in the chart shows a zoom of the first 5 minutes after the start of operation. The inset confirms the ability of the redox flow cell to sustain a power output higher than 0.5 mW for around 3 minutes, which is a power value that is sufficient to run a measurement in water quality monitoring applications.

Furthermore, the current output of the redox flow cell was extracted from the recorded voltage and integrated over the time (area under the I(t) curve), which allowed to compute the total charge obtained from the species. This allows calculating the Faradaic efficiency ($\varepsilon_F$) of the redox flow cell, a concept that provides the rate of species utilization of the power source of this example:

$$\varepsilon_F = \frac{\int I(t)\partial t}{n \times F \times C_O \times V}$$

where, n is the number of electrons per mole, F is the Faraday constant, $C_o$ is the initial species concentration, and V is the volume of electrolyte.

Assuming that the 500 $\mu$L water droplet divides equally in two parts that flow across the two redox flow cell electrodes, considering that the species have a total concentration of 0.1 M and knowing that two electrons are transferred per molecule, the $\varepsilon_F$ value for the device yielded 23%.

Ascorbic acid (AA) was found to be a suitable organic alternative to hydrobenzoquinones ($H_2BQS$) able to yield higher power outputs when tested in the co-laminar flow cell (CLFC). Hence, a power source was assembled with stored solid phase AA instead of the $H_2BQS$. The set of experiments were repeated, i.e. the polarization curves over one hour and the discharge against the 500 $\Omega$ load. The results obtained for AA are compared to those obtained for $H_2BQS$ in

Figures 16-18. Figure 16 shows a maximum power output of 1.9 mW for the case of AA compared to 1.1 mW in the case of $H_2BQS$. The figure also shows higher OCV values for AA than for $H_2BQS$, which is consistent with the results in the CLFC. Furthermore, the use of AA in solid form yields OCV values higher than 1 V, which may allow direct feed low-power instrumentation without the need of a voltage up-converting step or cell stacking configurations.

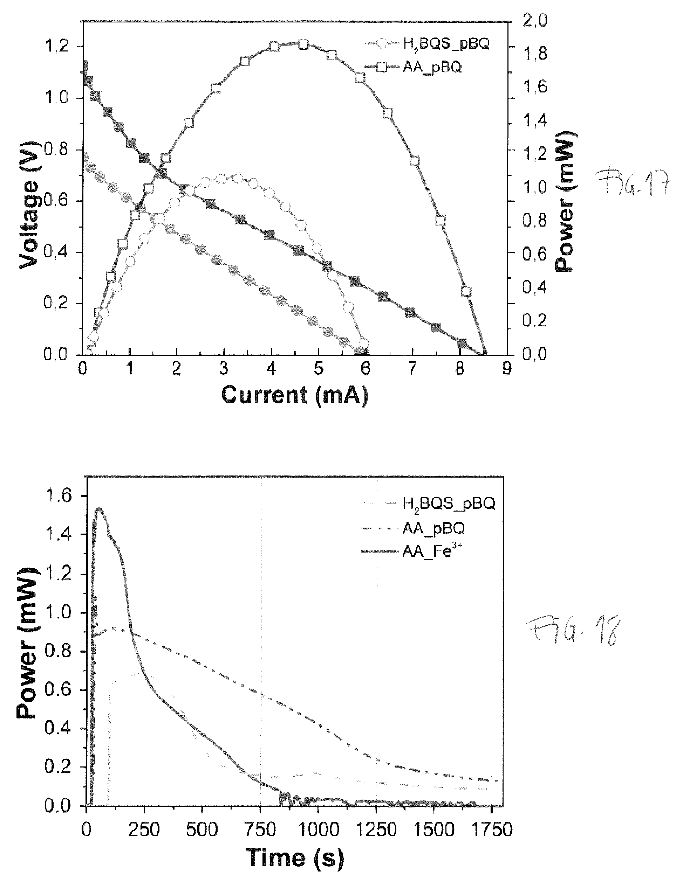

The polarization curve at the maximum power output (obtained after 20 minutes from water activation) is given in Figure 17. It can be seen that a maximum power output of 1.9 mW is achieved at a current of 4.5 mA.

The power output yielded by the cell when subjected to a 500 Ω load during the first 30 minutes after water activation is plotted in Figure 18. It is noted from the figure that the cell with AA anodic species sustained a power output higher than the $H_2BQS$ case. The efficiency for the AA case was also calculated and compared with the $H_2BQS$ as follows:

| Anode species | Faradaic Efficiency |
|---------------|---------------------|
| AA | 24.4% |
| $H_2BQS$ | 23.1% |

Iron chemistry is a suitable alternative to pBQ because, despite being an inorganic compound, it is harmless to water systems and can even enrich the composition of soil.

Therefore, $Fe(NO_3)_3$ and oxalic acid were stored in the cathode of the power source instead of the pBQ and tested against AA anode with KOH. The power output when the power source was subjected to a load of 500 Ω is shown in Figure 18. Preliminary results show that this chemistry yields higher power output than the pBQ. However, the high solubility of this compound requires a further optimization of the flow rate to extend the redox flow cell operation for longer periods.

**Claims**

1. Portable and disposable power source for measuring and/or monitoring solutions **characterised in that** it comprises:

   • a flow cell comprising:

   - a microfluidic path (1),
   - an anode (2) electrode, and
   - an cathode (3) electrode,

   • an anolyte comprising:

   - an active redox species (4) suitable for oxidation at the anode (2) electrode, and,
   - a supporting electrolyte,

   • a catholyte comprising:

   - an active redox species (5) suitable for reduction at the cathode (3) electrode, and,
   - a supporting electrolyte,

   **characterized in that** the portable power source further comprises:

   • at least one absorbent pad (6),
   • wherein the microfluidic path (1) is a capillary-based microfluidic path (1),
   • wherein the anolyte and the catholyte are intended to flow through the capillary-based microfluidic path (1) in a parallel co-laminar arrangement toward the at least one absorbent pad (6), by means of the solution, being intended to be deposited on the flow cell, and
   • wherein at least the capillary-base microfluidic path (1), the anolyte, the catholyte and the at least one absorbent pad (6) are biodegradable.

2. Portable and disposable power source for measuring and/or monitoring solutions according to claim 1 **characterised in that** the capillary-based microfluidic path (1) is a paper-based microfluidic path (1).

3. Portable power source for measuring and/or monitoring solutions according to claim 2 **characterised in that** the paper-based microfluidic path (1) comprises a primary pore diameter between 0.1 and 50 $\mu$m.

4. Portable and disposable power source for measuring and/or monitoring solutions according to any of the previous claims **characterised in that** the capillary-based microfluidic path (1) comprises two reservoirs (7) for the storage of the anolyte and catholyte.

5. Portable and disposable power source for measuring and/or monitoring solutions according to any of the previous claims **characterised in that** the capillary-based microfluidic path (1) is disposed below and over the anode (2) and the cathode (3), wherein the anolyte and the catholyte are intended to flow from the capillary-based microfluidic path (1) towards the at least one absorbent pad (6) through the anode (2) electrode and the cathode (3) electrode, being the anode (2) electrode and the cathode (3) electrode a porous anode (2) electrode and a porous cathode (3) electrode respectively.

6. Portable and disposable power source for measuring and/or monitoring solutions according to claim 5 **characterised in that** the capillary-based microfluidic path (1) comprises a central inlet pad (8) disposed on the top of the power source, the central inlet pad (8) being capable to receive the solution and **in that** the at least one absorbent pad (6) is disposed on the bottom of the power source.

7. Portable and disposable power source for measuring and/or monitoring solutions according to any of previous claims 1 to 4 **characterised in that** the capillary-based microfluidic path (1) is disposed over the anode (2) electrode and the cathode (3) electrode, wherein the anolyte and the catholyte are intended to flow through the capillary-based microfluidic path (1) over the anode (2) electrode and the cathode (3) electrode towards the at least one absorbent pad (6).

8. Portable and disposable power source for measuring and/or monitoring solutions according to any of previous claims 1-5 or 7 **characterised in that** the at least one absorbent pad (6) is situated adjacent to an end of the capillary-based microfluidic path (1).

9. Portable and disposable power source for measuring and/or monitoring solutions according to any of previous claims **characterised in that** the active redox species (4, 5) are organic active redox species (4, 5).

10. Portable and disposable power source for measuring and/or monitoring solutions according to any of previous claims **characterised in that** the active redox species (4, 5) are disposed in a lyophilized state.

11. Portable and disposable power source for measuring and/or monitoring solutions according to any of previous claims **characterised in that** at least one of the anolyte and the catholyte are in solid form.

12. Portable and disposable power source for measuring and/or monitoring solutions according to claim 11 **characterised in that** the anolyte and the catholyte are soluble in a liquid.

13. Portable and disposable power source for measuring and/or monitoring solutions according to claim 11 **characterised in that** the anolyte and the catholyte are soluble in the corresponding supporting electrolyte.

14. Portable and disposable power source for measuring and/or monitoring solutions according to any of the previous claims **characterised in that** the active redox species (4) suitable for oxidation at the anode (2) electrode is selected from the group between hydroquinone sulfonic acid ($H_2BQS$) and ascorbic acid (AA) and the active redox species (5) suitable for reduction at the cathode (3) electrode is selected from the group between para-Benzoquinone (pBQ) and $Fe(NO_3)_3$.

15. Portable and disposable power source for measuring and/or monitoring solutions according to claims 13 and 14 **characterised in that** the supporting electrolyte for the active redox species (4) suitable for oxidation at the anode (2) electrode is potassium hydroxide (KOH).

16. Portable and disposable power source for measuring and/or monitoring solutions according to claim 15 **characterised in that** the supporting electrolyte for the active redox species (5) suitable for reduction at the cathode (3) electrode is selected from the group between sulfuric acid ($H_2SO_4$), sodium chloride (NaCl in $H_2O$), citric acid and oxalic acid.

FIG.1

FIG.2

0.13 mm

0.25 mm

2 mm
0.1 mm

0.25 mm

0.25 mm

1 mm

0.13 mm

FiG. 3

FiG. 4

FIG. 5

FIG. 6

FIG. 7

FIG 8

FIG. 9

EP 3 182 494 A1

| | Anode | | Cathode | | Flow rate [µL/min] | OCV [V] | Max. Power [µW] | Current @ 0.1 V [µA] | Cell Resistance [Ω] |
|---|---|---|---|---|---|---|---|---|---|
| | Species | Supporting Electrolyte | Species | Supporting Electrolyte | | | | | |
| (a) | 50 mM H₂AQS | 1M H₂SO₄ | 50 mM BQDS | 1M H₂SO₄ | 10 | 0.583 | 29.25 | 232.5 | 49 |
| | | | | | 100 [a] | | 54 | 637.5 | |
| | | | | | 300 | | 65.25 | 840 | |
| | 50 mM H₂AQS | 1M H₂SO₄ | 50 mM BQDS | 1M H₂SO₄ | 100 | 0.495 | 20.25 | 195 | 54 |
| | | | | | | | 29.25 | 255 | |
| | | | | | | | 48.75 | 457.5 | |
| | 100 mM H₂QX | 1M H₂SO₄ | 100 mM BQDS | 1M H₂SO₄ | 10 | 0.530 | 42 | 262.5 | 60 |
| | | | | | 100 | | 97.5 | 727.5 | |
| | | | | | 300 | | 105 | 825 | |
| (b) | 10 mM H₂QX | 1M H₂SO₄ | 10 mM O₂BA | 1M H₂SO₄ | 100 | 0.427 | 0.825 | 8.25 | 93 |
| | 10 mM HHB | 1M H₂SO₄ | 10 mM RA | 1M H₂SO₄ | 10 | 0.386 | 3 | 18 | 93 |
| | | | | | 100 | | 5.25 | 48.75 | |
| | | | | | 300 | | 6.375 | 60 | |
| (c) | **100 mM H₂BQS** | **1M KOH** | **100 mM pBQ** | **1M H₂SO₄** | **10** | **0.815** | **352.5** | **1822.5** | **90** |
| | | | | | **100** | | **487.5** | **2587.5** | |
| | 100 mM H₂BQS | 1M KOH | 100 mM pBQ | 3% w/w NaCl in H₂O | 10 | 0.701 | 29.25 | 262.5 | 179 |
| | | | | | 100 | | 41.25 | 390 | |
| | 100 mM H₂BQS | 1M KOH | 100 mM pBQ | 1M Citric acid | 10 | 0.765 | 57 | 262.5 | 1228 |
| | | | | | 100 | | 53.25 | 240 | |
| | 100 mM H₂BQS | 1M KOH | 100 mM pBQ | 1M Oxalic acid | 10 | 0.780 | 157.5 | 757.5 | 220 |
| | | | | | 100 | | 165 | 802.5 | |
| | 100 mM H₂BQS | 0.1M KOH | 100 mM pBQ | 0.1M Citric acid | 10 | 0.668 | 9.75 | 64.5 | 3356 |
| | | | | | 100 | | 10.5 | 70.5 | |
| | 100 mM H₂BQS | 0.1M KOH | 100 mM pBQ | 0.1M Oxalic acid | 10 | 0.665 | 21 | 142.5 | 1030 |
| | | | | | 100 | | 23.25 | 165 | |
| | **100 mM AA** | **1M KOH** | **100 mM pBQ** | **1M H₂SO₄** | **10** | **0.929** | **465** | **1890** | **93** |
| | | | | | **100** | | **690** | **3262.5** | |
| | 100 mM AA | 1M KOH | 100 mM pBQ | 1M Citric acid | 10 | 0.909 | 75 | 345 | 1214 |
| | | | | | 100 | | 64.5 | 262.5 | |
| | **100 mM AA** | **1M KOH** | **100 mM pBQ** | **1M Oxalic acid** | **10** | **0.925** | **210** | **900** | **183** |
| | | | | | **100** | | **300** | **1575** | |

FIG. 10

FiG. 11

FiG. 12

FIG.13

FIG.14

FiG.15

FiG. 16

FIG. 17

FIG. 18

FIG. 19

FIG. 20

FIG. 24

FIG. 21

FIG. 22

FIG. 23

**EP 3 182 494 A1**

Europäisches Patentamt
European Patent Office
Office européen des brevets

## EUROPEAN SEARCH REPORT

Application Number

EP 15 20 0865

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/189973 A1 (CONSEJO SUPERIOR INVESTIGACION [ES]) 27 December 2013 (2013-12-27) | 1-13 | INV. H01M8/20 H01M6/32 |
| Y | * page 4, line 1 - line 29; figures 1a,1b * <br> * page 14, line 8 - page 15, line 23 * <br> ----- | 14-16 | |
| Y | US 2014/370403 A1 (NARAYAN SRI [US] ET AL) 18 December 2014 (2014-12-18) * claims 1-9; figure 1 * <br> ----- | 14-16 | |
| A | WO 2006/028347 A1 (LEE KI BANG [KR]) 16 March 2006 (2006-03-16) * abstract; figures 1,2 * <br> ----- | 1-16 | |
| A | US 2009/092882 A1 (KJEANG ERIK [SE] ET AL) 9 April 2009 (2009-04-09) * abstract; figures 1-3 * <br> ----- | 1-16 | |
|  |  |  | TECHNICAL FIELDS SEARCHED (IPC) <br><br> H01M |

The present search report has been drawn up for all claims

| Place of search | Date of completion of the search | Examiner |
|---|---|---|
| Munich | 10 June 2016 | Hintermaier, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 20 0865

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2016

| Patent document cited in search report | | | Publication date | Patent family member(s) | | | Publication date |
|---|---|---|---|---|---|---|---|
| WO 2013189973 | A1 | | 27-12-2013 | CN | 104508889 | A | 08-04-2015 |
| | | | | EP | 2865037 | A1 | 29-04-2015 |
| | | | | US | 2013341188 | A1 | 26-12-2013 |
| | | | | US | 2015202621 | A1 | 23-07-2015 |
| | | | | WO | 2013189973 | A1 | 27-12-2013 |
| US 2014370403 | A1 | | 18-12-2014 | CN | 105409045 | A | 16-03-2016 |
| | | | | EP | 3011627 | A1 | 27-04-2016 |
| | | | | US | 2014370403 | A1 | 18-12-2014 |
| | | | | WO | 2014204985 | A1 | 24-12-2014 |
| WO 2006028347 | A1 | | 16-03-2006 | CN | 101015080 | A | 08-08-2007 |
| | | | | EP | 1803179 | A1 | 04-07-2007 |
| | | | | JP | 2008512839 | A | 24-04-2008 |
| | | | | KR | 20060023228 | A | 14-03-2006 |
| | | | | US | 2008038588 | A1 | 14-02-2008 |
| | | | | WO | 2006028347 | A1 | 16-03-2006 |
| US 2009092882 | A1 | | 09-04-2009 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **IBRAHIM, O.A. ; GOULET, M.-A. ; KJEANG, E.** In-situ characterization of symmetric dual-pass architecture of microfluidic co-laminar flow cells. *Electrochimica Acta,* 2016, vol. 187, 277-285